# EUROPEAN PATENT APPLICATION

(11) **EP 1 010 662 A1**
(43) Date of publication of application: **21.06.2000**
(21) Application number: 97912228.0
(22) Date of filing: 19.11.1997
(51) Int. Cl.: B66B 11/04, F16H 35/00

(54) **MECHANICAL SYSTEM FOR CONTROLLING THE SPEED OF ELECTRIC LIFTS**

(30) Priority: 25.11.1996 ES 9602486
(71) Applicant: De Areta Fernandez, Eduardo M., 48600 Sopelana-Vizcaya (ES)
(72) Inventor: De Areta Fernandez, Eduardo M., 48600 Sopelana-Vizcaya (ES)
(86) International application number: ES9700281
(87) International publication number: WO9823527

(57) **Abstract**

The system of the invention is based on a mechanism comprised of a mechanical brake of the charge actuating as a brake in both rotation directions and automatically, thereby being independent of the magnitude and direction of the resulting torque of cabin-counterweight (charge torque). The mechanism comprises a toothed motor plate (5) which is set in motion by a gear (4) integral with the input shaft (3); said driving plate (5) is mounted by means of a variable trapezoidal threading to the threaded shaft (6) or output shaft on which the charge torque actuates. On said shaft (6) are mounted collaterally to the drive plate (5) two other charge plates (8); two brake discs (10) assisted by a unidirectional mechanism are arranged between the two charge plates (8). As a function of the direction of the charge torque adopted by the output shaft (6), the active brake will be either the left side or the right side, the other remaining inactive.

## Description

### FIELD OF THE INVENTION

The present invention, according to the above subject of this description, refer a **Mechanical System of Speed Control (MSSC)** for Electrical Lifts contributing outstanding characteristics and advantageous, in front of the conventional systems, permiting to control the load speed with the continuous current motor. If the motor is of alternative current, short circuit, it allows easy and progressive starts with hydrodinamic coupling, permiting not use traditional motors of two speed, and in addition to same extent would replace the starts by electrical resistances and/or electronic components, as large as it possible.

On the other hand, it allows to leave the traditional device of **"screw-toothed crown"** used at nowadays in electrical lift, by cylindrical gears as propose the invention, because the device efficiency is better, being in consecuence less power for the motor installed.

Also have to take account that the work of the motor the same as the load torque converts into generated heat at load mechanical brake, because is a speed control by mechanical means. All of disipated energy goes into mechanical system of speed control, being neccesary to cool it by oil circulation.The mecanical system of speed control in accordance to the present invention, gives the following advantage characteristics:
- **Replease to "crew-toothed crown" used in gearbox for electrical lift, by "pinion-wheel".**
- **Have an efficiency higher than "screw-toothed crown" device. In the same way, is totaly unreverse.**
- **The motor always works as driving motor (never hold), not needing electrical brake.**
- **In the presence of driving torque inexistance, because of any circumstance, works as a brake as automatic manner.**
- **The braking torque is proportional to the load torque.**
- **The braking time is proportional to the load torque and speed.**
- **May replace to the alectrical systems of braking control.**
- **Also allow to couple to a short circuit motor, through hydrodinamic coupling, allowing easy and progressive starts.**
- **Allow to control the load speed, with all kind of motors.**
- **The motor never feeds back electrical current to the electrical line, when the mechanical system of speed control is working, being opposite to happening with traditional device when the motor works for raising the load.**

All characteristics above mentioned are the same with independence of the site position of **MSSC** inside of cinematic chaine, being applicable to gearbox with more of one reduction.

### BACKGROUND OF INVENTION

The elevator gearbox of **"screw-toothed crown"**, used at nowadays in electrical lift, never guarantee the unreverse of said system, in case of the electrical brake fails.

This kind of gearbox could only consider unreverse, in case of screws with one filet, which has inclination angle less than 4°, but even so this condition dosn't guarantee the unreverse. Besides it depends on the inclination angle of the thread, also depend on the friction coefficient betwen screw and toothed crown, and at the same time, this one depend to the lubrication of the contact surfaces.

Therefore, can consider that the unreverse of this kind of gears is random for a gave value of the inclination angle. The inclination angle can decrease till the physical boundaries, then would decreace the random phenomenon and can sure that is unreverse for said inclination angle; but now the problem would be an efficiency very low, being the motor power higher, consequentely the generated heat is higher too.

In consecuence, in electrical lift or traditional device likes **"screw-toothed crown"**; the resulting torque of the cabin load and counterweight are counterbalanced by the braking torque of a electrical brake if the electrical supply fails. That evidently happen whether the brake should mechanicaly fails, then the cabin and counterweight slides, for all cases where the "parachute system" (obligatory in lift) not able to work , since the **"screw-toothed crown"** is not totally unreverse, as above said.

As far as known by the applicant, can be regarded as useful for understanding, searching and examination of the invention the background art of the following document US-A-3572482, defined as category A (not considered to be of particular relevance). That can only works with lowering load torque in one rotating direction, while the present invention can works in both direction as a brake governor.

### INVENTION DESCRIPTION

In general way and to resolve the above issue, the present device is based on a mechanical system of speed control for electric lift, which consists to incorporate on the cinematic chaine a **"mechanical brake of load" (Weston brake),** which able to work at two rotation directions, in accordance to the resulting torque of cabin-counterweight, being totally unreverse in both rotation directions.

The most important properties of this device are as follows:
- **When the resulting weights of the cabin and counterweight is on lowering , the motor torque is in the same direction of the resulting torque of the cabin-counterweight (load torque).**
- **When the resulting weights, as above said conditions, is on raising, the motor torque is against of the resulting torque of cabin-counterweight (load torque).**
- **Besides due to the own unreverse property, that is an automatic mechanical brake, more safe than electrical brake, which provide no retarding torques.**

Due to the above, the mechanical brake can control the load speed, besides increase the efficiency of the machine, because uses cylindrical gears. For machines of low and half powers is sufficient the brake is immersed into a bath of lubricating oil. Now then, for high powers there are to improve the said oil system by other one forced, to dissipate better the heat, since as above said, all energy to control the load goes into the load brake.

The forced lubricating system consists of providing with an oil pump incoporated to a input shaft, wich is moved by the last one.

The device of this invention, is based on the application from "mechanical load brake" to the electrical lift, actuating as a brake in both rotations directions that automaticaly acts for any value and sense of direction of the load torque (cabin-counterweight), being stable for any speed of the load, allowing to replace the traditional design **"screw-toothed crown"**, by cylindrical dears **"pinion-toothed wheel".**

The above device having a toothed driving plate, wich is moved by a pinion integral with the entry shaft (imput), which incorporates two bearing place in the both shell side.

The driving plate has a trapezoidal threading of several entrances, that permits to move along the threaded shaft portion. Said threaded shaft is the output shaft, which is leaned on two rolling bearing, whose placed in the shell. On said shaft acts the load, torque (cabin-counterweight). In the same way, the driving plate is mounted betwen two collaterally load plates, being leaned on two bronce bearing and fillered to the output shaft

Betwen each one of said load plates and driving plate are placed two brake discs, including a brake shoe, whose are in floating position betwen said brake shoe and respective plate. The brake discs have freedom of rotation because are assembled through rolling bearing, but they can only rotation in one direction, due to an unidirectional device (free wheel).The direction of rotation for each brake discs is opposite to the other one, which is a funtion of the direction of the trapezoidal thread of the output shaft.

The four brake shoes are put together among the load plates, driving plate and brake discs. The material used for the brake discs is bronce or ferobestos, having stable friction coefficient within a temperature margin, where the mechanical brake works.

The brake shoes are assembled freedom among corresponding plates, being only leaned on the internal surfaces of the respective brake discs, having grooves performed in both friction faces of the brake shoes, that permit the oil circulation. In this manner, the contact surfaces of the load and driving plates are perfectly lubricated and cooled. The oil circulation among plates decrease the level of noice, the lost of power for the generated heat and the wear of brake shoes.

In case of neccessary, this device can also provide a forced lubricating system, to keep a stable level of temperature on the friction surfaces. That consists in providing an oil pump, which is moved by the input shaft. The circulation oil flows from a gears shell through a pipe till a end of the output shaft. The oil continues through a central drilled hole in the said output shaft until get by the threading sides. Following the oil flows through the friction surfaces by a grooves performed on the brake shoes .Once the oil goes off the friction plates, again goes into the gears shell, to start a new cycle.

For making easy the understanding of the invention characteristics here enclosed two dravings for illustrating and not limiting, whose show as follows:

### BRIEF DESCRIPTION OF THE DRAWINGS

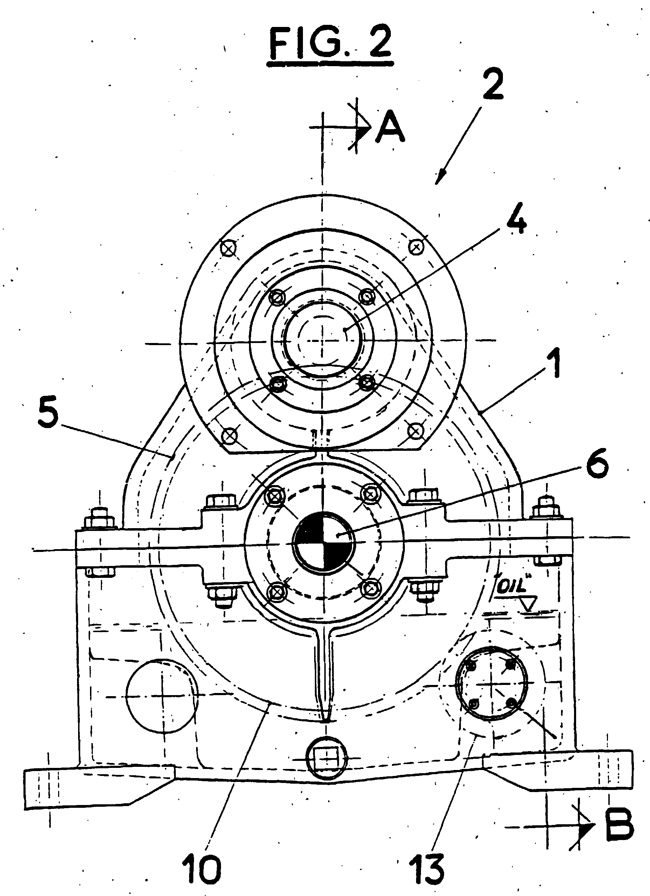

**Figure 1**.- This is a section view of the device in which physicaly shows the mechanical load brake, named **Mechanical System of Speed Control (MSSC)** for electrical lift, which is the invention proposal. It is in accordance to A-B section of the figure 2.
**Figure 2**.- This is a frontal view of the device of figure 1.

### DESCRIPTION OF THE PREFERRED EMBODIMENT

Making reference to the above numbers on the said figures, can see referenced with the number (1) the sell contain different alements, whose comprise the mechanical load brake, showed as a whole with number (2).

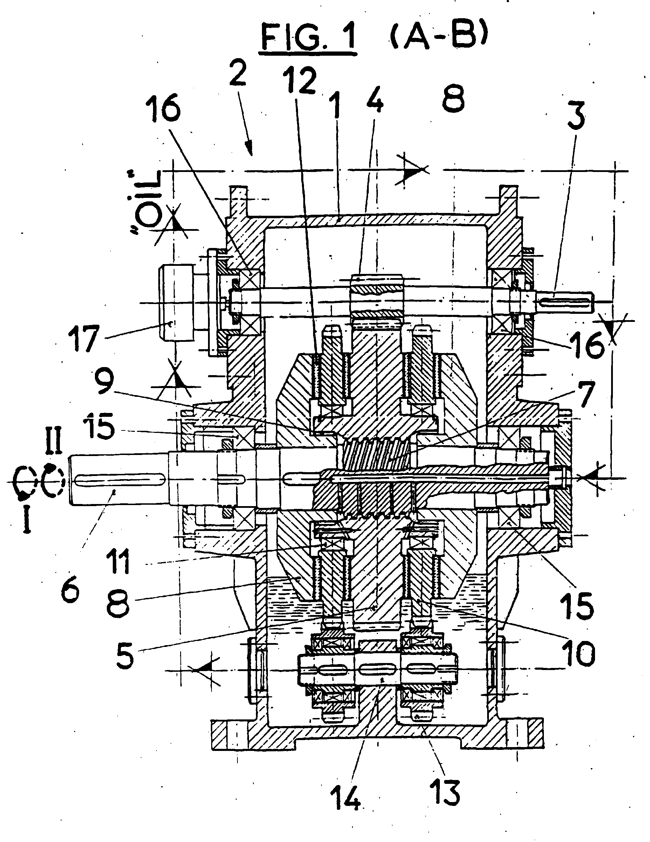

The composition comprises a pinion (4) integral with an input shaft (3), which attacks against a toothed driving plate (5), assembled on output shaft (6), through a trapezoidal thread portion of several entrances (7), placed on the middle of said output shaft (6), joining with the internal thread of said driving plate (5), as clearly show the figure 1.

To both sides of driving plate (5) are assembled a load plates (8), fixed by fillers to said output shaft (6).

The load plates (8) incorporate an axial necks, where lean on the respective ends of the driving plate (5), through an antifriction bearing (9).

The number (10) point out a brake discs assembled through rolling bearings (11), placed betwen driving plate (5) and its respective load plate (8), being provided with brake shoes (12) in both faces, said brake discs (10) have a outer toothed, which permanently gear with a free wheels (13), being assembled on a fix shaft (14), being fixed by fillers to a shell box (1). As said at first, the free wheels (13) can only have rotation in one direction, being opposited one to the other, and depending its respective directon of the screw direction of the trapezoidal thread (7), which joints the driving plate (5) with the output shaft (6).

The number (15) point out two lean bearings of the output shaft (6) and number (16) the bearings of the input shaft (3).

Whith said arrangement, the working order of said device is as follows:

As above said on the output shaft (6), acts the resulting load torque of counterweight and cabin weight, being the working order of the mechanical load brake different, depending on what direction acts the load torque:

### Load torque as I

Supposing a load torque direction as show at I in drawing n° 1, have two way of working order depending on rotation direction of the driving torque, can acts opposite or in the same direction of the load torque.
- In the first way, supposing the rotation direction of driving torque is opposite to the load torque, can say as follows:
   The driving plate (5) is axially moved towards the right end of an output shaft (6), by the effect of a thread (7), due to the rotation of a pinion (4), integral with an input shaft (3), making the tightening of said driving plate (5) - brake shoes (12)-load plate (8) (**right brake assembly**), working all the assembly as if were an only piece, transmitting the movement to an output shaft (6). During said process, a "free wheel" (13) is arranged of such manner that can freely have rotation, allowing that the right brake assembly can freely rotate.

The left-brake disc (10) remain blockaded, it impeded by the "left free wheel " (13), as above said, because its freedom of rotation is opposite to the "right free wheel" (13). At the same time, the collateral load plate (8) and the right brake assembly have rotation united with the output shaft (6), making sliding on the common friction faces, but without never damagin effects, because no pressure inside the **left brake assembly**, since said movements of the assembly are permited, without lost power, and consequentely less heat emission.

Therefore, in this sense, said mechanism works "**as a whole**", the mechanical brake does not works as brake, but as a traditional machine.
- In the second way, supposing now that the rotation direction of the driving torque is in the same direction as the load torque, can establish as follows:
   The driving plate (5) is axially moved towards the left end of output shaft (6), by the thread (7) effect, due to the rotation of a pinion (4) ot the input shaft (3), making the untightening of the **right brake assembly**, therefore decrease the pressure on the plates, in consecuence the load torque acts increasing the speed of the output shaft (6), making that go back to screw in the driving plate (5), shaping a brake assembly (right), increasing the braking torque, being the load breaked and controlled. Said process permanently continues along the time, characterized by a sinusoidal movement with "very low period" (imperceptible), since the load plate (8) follows the speed fluctuation of the driving plate (5) with total precision. In practice can stablish the speed as of the driving plate (5), and of the load plate (8) are iquals.

In case of the driving torque disappear, for any circumstance, the load is automatically stoped by the "**right brake assembly**", being retained by the right free wheel.

During said process, the left brake disc (10), can freely have rotation, because the correspondant "free whell" (13) permits it.

**In conclusion, with lowering load torque adopts the direction as "I", the active brake assembly is the right, while the left brake assembly remaining inactive. With raising load torque both brake assembly remaining inactive, working as a traditional machine.**

### Load torque as II

When the resulting load torque of the cabin weight and counterweight has a direction as II, in drawing n° 1 , then the manner of working order is opposite to the prior description, identical but inverse. The active mechanical elements are the symmetrics, and its movements are the opposites.

**In consecance, with lowering load torque adopts the direction as "II", the active brake assembly is the left, while the right brake assembly remaining inactive. With raising load torque both brake assembly remaining inactive, working as a traditional machine.**

## Claims

1. **. MECHANICAL SYSTEM OF SPEED CONTROL (M.S.S.C.)** for Electrical Lifts, including a mechanism comprising a load brake, able to automatically works as a brake in two rotation directions, depending on the value and direction of resulting torque of the cabin weight an counterweight **(load torque)**, characterized in that said mechanism comprises a toothed driving plate (5), which is set in motion by a pinion (4), integral with an input shaft (3) , the driving plate (5) has a trapezoidal thread portion (7) of several entrances which permits axial movements along thread portion (7) an output shaft (6), on which shaft said load torque actuates, having two load plates (8) fixedly on said output shaft (6), collaterally to the driving plate (5), and said load plates having axial necks, on which outer periphery said driving plate (5) leans and is centered, owing to bronce bearings preferably (9), a brake disc is placed on each side of said driving plate (5) between said driving plate and each one of said load, plates (8) said brake discs (10), being provide with brake shoes (12) in both faces, said brake discs (10) are assisted by a unidirectional mechanisms (13), which only allows rotation in one direction, one opposite to the other, and at the same time depending on thread direction of the driving plate (5).

2. **SYSTEM OF MECHANICAL SPEED CONTROL (M.S.S.C.)** for Electrical Lifts, in accordance to claim 1, including an unidirectional mechanism, comprising two "toothed free wheels" (13),being fillered to a common shaft (14), said free wheels permanently gear with the toothed brake discs (10).

3. **MECHANICAL SYSTEM OF SPEED CONTROL (M.S.S.C.)** for Electrical Lifts, in accordance to claim 1, including a brake discs (10), having a brake shoes (12), to both sides, being freely assembled and having their friction surfaces performed a grooves, whose allow to flow the lubricating oil.

4. **MECHANICAL SYSTEM OF SPEED CONTROL (M.S.S.C.)** for Electrical Lifts, in accordance to claim 1, including a forced lubrication by an reversing oil pump (17), which is set in motion by the own input shaft (3). The oil flows along an external tube from a carter till one end of an output shaft (6), the oil continues through a central drilled hole in the said shaft (6), and feeding the cavity betwen the thread faces. Following the oil flows through a grooves performed on the four faces of the brake disc (10), at the end, the oil finally came in to said carter.
